# EUROPEAN PATENT APPLICATION

(11) **EP 2 874 293 A1**
(43) Date of publication of application: **20.05.2015**
(21) Application number: 13382461.5
(22) Date of filing: 14.11.2013
(51) Int. Cl.: H02K 49/10

(54) **Contactless magnetic gear**

(71) Applicant: Universidad Carlos III de Madrid, 28918 Leganés (ES)
(72) Inventor: Pérez Díaz, José Luis, 28918 Leganés (ES); Díez Jiménez, Efrén, 28918 Leganés (ES); Valiente Blanco, Ignacio, 28918 Leganés (ES); Alvarez Valenzuela, Marco Antonio, 28918 Leganés (ES); Cristache, Cristian, 28918 Leganés (ES); Sánchez García-Casarubios, Juan, 28918 Leganés (ES); Castro Fernández, Víctor, 28918 Leganés (ES)
(74) Representative: Lorca Melton, Miguel

(57) **Abstract**

A contactless magnetic gear with an efficient closing of magnetic flux lines that enhances the maximum torque capability and the efficiency and simultaneously reduces the magnetic pollution outside. It can be used as a reducer for a rotating axle or transmission tree in any kind of machine, providing a fixed velocity ratio between the input and output axles -if the torque is below a limit- and torque limiter function -sliding-.

## Description

### Technical Field

The present invention is related to a contactless magnetic gear with an efficient closing of magnetic flux lines that enhances the maximum torque capability and the efficiency and simultaneously reduces the magnetic pollution outside. It can be used as a reducer for a rotating axle or transmission tree in any kind of machine, providing a fixed velocity ratio between the input and output axles -if the torque is below a limit- and torque limiter function -sliding if the torque tries to overpass the limit-.

### Background of the invention

Magnets are extensively used for actuators or to make pieces to attract themselves. For example GB1331943A claimed the use of magnetisable materials and magnets with axial magnetization to produce attraction between two friction wheels. In this case there are no teeth and the velocity ratio is given by the diameters ratio provided there is no sliding. In this kind of transmission there are contact, friction and eventually wear.

Indeed, the main advantage of magnets is their capability to exert force at a distance in a contactless manner. In this sense magnetic gearboxes are mechanisms for the conversion of torque/speed provided with magnets that exert force from a certain distance and whose gears do not touch each other. Magnetic gears have several advantages over conventional mechanical gears: lack of wear, silent operation, low vibration level, no need of lubrication, reduced maintenance and improved reliability. Furthermore, they provide intrinsic overload protection and have no connection between the parts.

In US687292 a power transmitting device based on magnetic spur gears and magnetized coils was claimed by Amstrong. Spur, skew, bevel and worm magnetic gears have long been studied and many inventions use trains of magnetic gears for torque-speed conversion as for example in US3792578 or the paper published by Y.D. Yao et al. entitled "The Radial Magnetic Coupling Studies of Perpendicular Magnetic Gears" in 1996 or, also for example, the worm magnetic gear claimed in GB2463102A.

Similarly to a conventional planetary mechanical gear, planetary (or epicyclical) magnetic gears have been proposed to obtain a higher torque density. E. Gouda published in 2011 a paper entitled "Comparative Study between Mechanical and Magnetic Planetary Gears" where it was demonstrated that the well-known Willis equations of mechanical planetary gears were also valid for the magnetic type.

All these devices generate alternating magnetic fields around them generated by the moving magnets. This is an undesirable magnetic pollution as it creates Eddy currents or alternating magnetization in surrounding pieces. This magnetic pollution, eventually, generates heat, brakes the device and dissipates energy. The lower the magnetic pollution is, the higher the efficiency of the magnetic gear.

In US1171351 a first magnetic planetary gear with variable gear ratios using magnetizing coils was claimed. US56335551997 also claimed a magnetic planetary gear. Two years later the same inventor described in US59948091999 an improved version with an external steel yoke to collect the magnetic field and reduce the magnetic pollution around the device. Although this yoke reduced the magnetic field around the device, the Eddy currents and magnetic hysteresis generated in the yoke produce undesirable braking and heat generation.

Most magnetic gearings used magnets with a radial direction of magnetization with respect to the axles. Axially magnetized magnets were also proposed for magnetic gears in WO2006105617A1. Magnetic gears with axially oriented magnets can also be arranged in sets enhancing the torque capability as in WO2004005760A1 or in FR2546253A1.

The main disadvantage of the axial orientation for spur gears is the large magnetic pollution generated by the moving magnets (teeth) that are able to generate heat by induction in all metallic and magnetic materials around them. This makes them difficult to use in machines, vehicles or aircrafts where necessarily they should be surrounded by the structure, other mechanisms and/or metallic and magnetic parts.

Although the spur magnetic gear described in FR2546253A1 could suggest a partial closing of the magnetic lines through the axle of one of the wheels -in case it could for example be made of carbon steel- this would be necessarily limited due to the saturation of the magnetization of the axle. Moreover, all the magnets in FR2546253A1 have their poles uncovered and consequently in the cited invention there is not any efficient closure of the flux lines. These uncovered poles are a source of undesirable magnetic pollution around the magnetic gear.

The present invention, characterized by covering a maximum number of magnetic poles closing magnetic flux circuits, minimizes the magnetic pollution as it will be described in the following.

### Summary of the invention

It is the object of this invention to provide a non-contact magnetic gear that generates a low magnetic pollution around it. This can be used for spur or for planetary gears to be used in transmission trees in machines, generators, vehicles, aircrafts, ships or others.

The non-contact magnetic gear of the present invention is provided with at least two wheels both provided with magnets. These magnets are regularly distributed along circles concentrically to the wheel itself. The magnets are fixed to the wheel. One of the wheels has a set of an even number of magnets axially magnetized in alternating directions. The other wheel is provided with at least a set of magnets magnetized in alternating directions and magnetically permeable elements characterized by covering at least one of the poles of every magnet and closing a magnetic circuit. The magnetic circuit of every magnetic tooth in at least one wheel is closed except for a gap where the magnets of the other wheel pass through. Forces between the magnets of a wheel and the magnetic circuits of the other wheel generate an enhanced gear-like non-contact engagement. The engagement force is higher between a magnet and a gap in a magnetic circuit than between magnets as used in previous conventional magnetic gears. Additionally, as the magnetic circuit is almost closed for the teeth of one of the wheels, the magnetic pollution generated by them is greatly reduced. The ratio of the gear is given by the ratio of numbers of teeth in the wheels.

In a preferred embodiment of the invention the number of magnets per tooth in the second wheel is at least two -just above and below the gap- cooperating to the closure of the magnetic flux circuit.

The above mentioned magnets are preferably permanent magnets. They can also be any other kind of magnetic flux generator as for example coils, electromagnets, superconductors or a combination of them.

The non-contact magnetic gear pair of wheels of the present invention described above can be used as a step of a spur gear but also can be combined to make more steps in a spur gear or to make planetary gears. Therefore in another preferred embodiment of a contactless magnetic gear of the present invention a planetary magnetic gear with low magnetic pollution is built up of an outermost wheel, a set of planet wheels and a sun as it is known for planetary gears.

The condition of earth and moving wheels can be exchanged by well-known kinematic inversion as it is usual in conventional spur and planetary gears.

### Brief description of the drawings

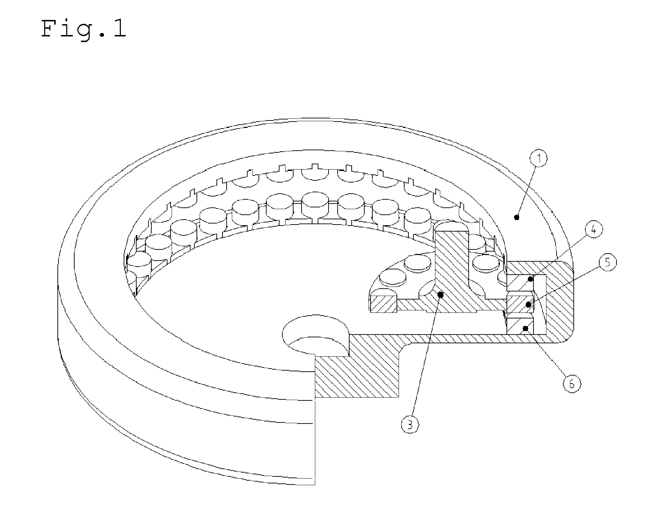

Fig. 1 is a perspective section of a preferred embodiment of the present invention in a direct spur magnetic gear configuration provided with a wheel (1) and a pinion (3). The wheel (1) is provided with a set of upper permanent magnets (4) and a second set of permanent magnets (6) while the pinion is provided with a set of permanent magnets (5). Both wheel and pinion will be supported by bearings -not shown in the figure- to allow a rotational movement of around their respective symmetry axis.

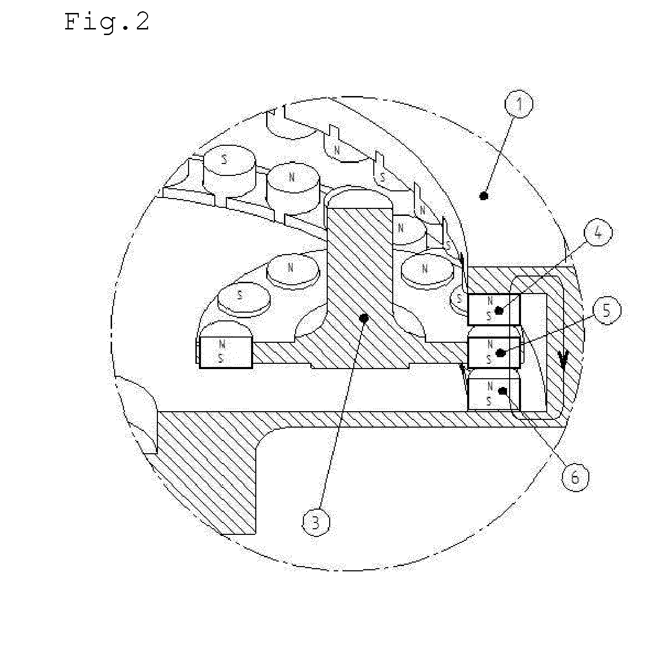

Fig. 2 is a detail of the preferred embodiment of fig. 1 showing a preferred orientation of the north (N) and south (S) poles of the magnets, with their magnetization parallel to the axis of the wheel (1) and the pinion (3).

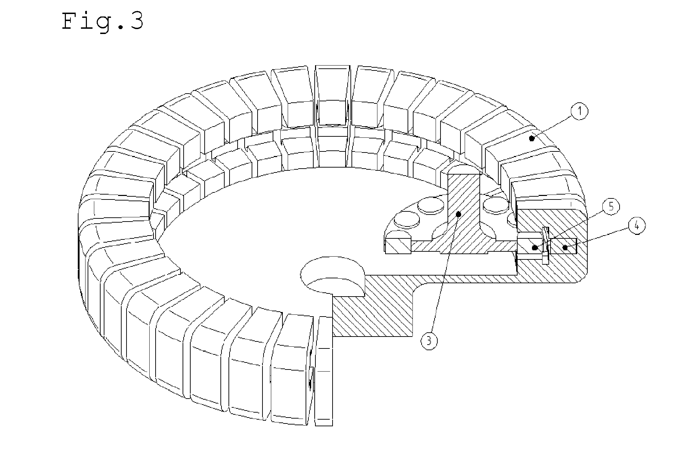

Fig. 3 is a perspective section of another preferred embodiment of the present invention in a direct spur magnetic gear configuration provided with a radially segmented wheel (1) and a pinion (3). The wheel (1) is provided with only one set of upper permanent magnets (4) and the pinion is provided with a set of permanent magnets (5). Both wheel and pinion will be supported by bearings -not shown in the figure- to allow a rotational movement of around their respective symmetry axis.

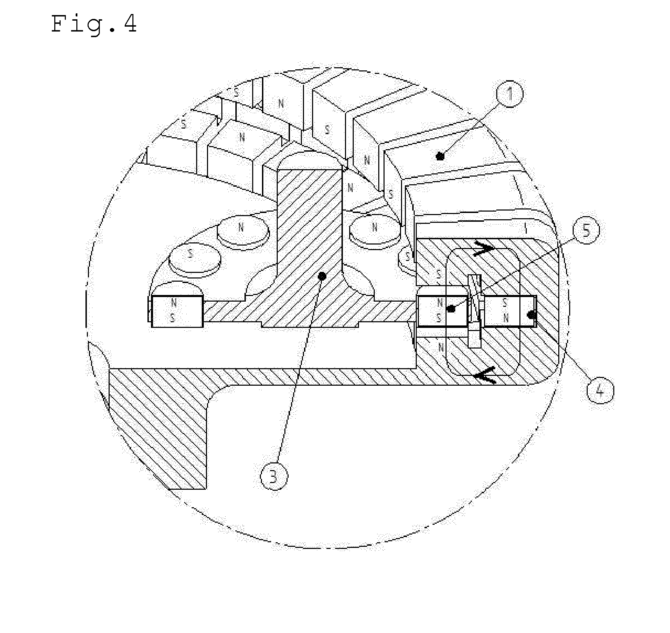

Fig. 4 is a detail of the preferred embodiment of fig. 3 showing a preferred orientation of the north (N) and south (S) poles of the magnets, with their magnetization parallel to the axis of the radially segmented wheel (1) and the pinion (3). The north (N) and South (S) poles generated on the soft magnetic material of the above mentioned wheel (1) due to the magnetization created by magnets (4) are also shown in fig 4.

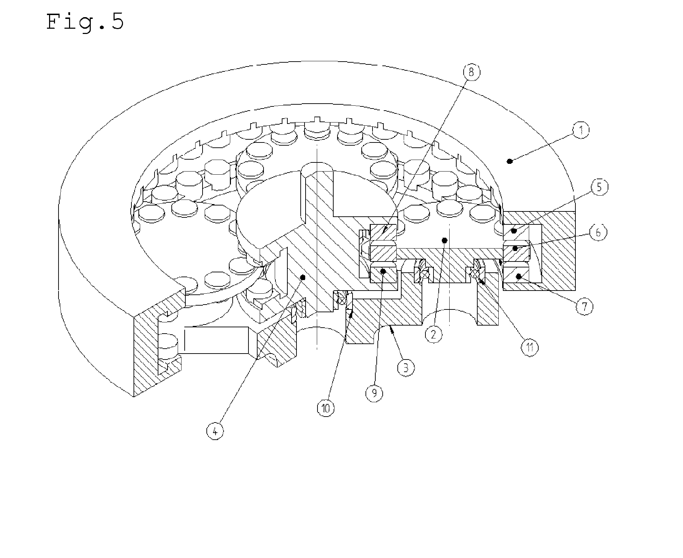

Fig. 5 shows another preferred embodiment of the present invention for a planetary magnetic gear configuration provided with a wheel (1), a set of planetary wheels (2), a planetary frame (3) and a pinion (4). The wheel (1) is provided with a set of magnets (5) and a set of magnets (7), the planetary wheels (2) are provided with a set of magnets (6) and the pinion is provided with a set of magnets (8) and a second set of magnets (9). A bearing (10) is provided to allow a rotation of the pinion (4) with respect to the planetary frame (3). A set of bearings (11) are provided to allow rotation of the planetary wheels (2) with respect to the planetary frame (3).

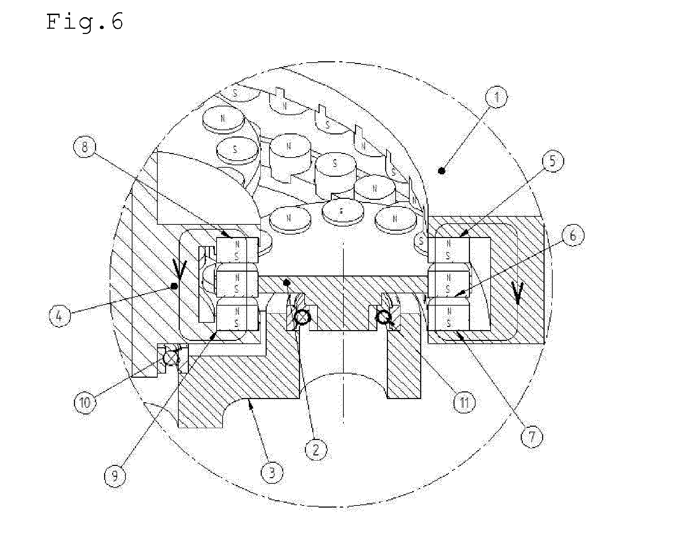

Fig. 6 is a detail of the preferred embodiment of fig. 5 showing the North (N) and South (S) poles of the sets of magnets (5), (6), (7), (8) and (9).

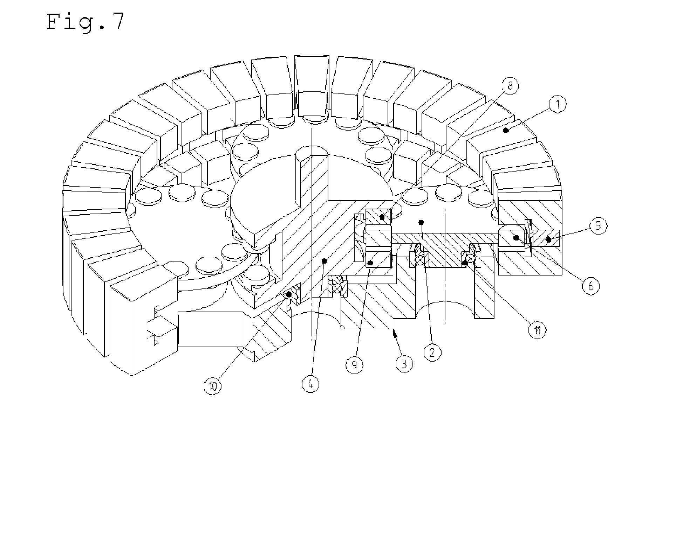

Fig. 7 shows another preferred embodiment of the present invention for a planetary magnetic gear configuration provided with a segmented wheel (1), a set of planetary wheels (2), a planetary frame (3) and a pinion (4). The wheel (1) is provided with a set of magnets (5), the planetary wheels (2) are provided with a set of magnets (6) and the pinion is provided with a set of magnets (8) and a second set of magnets (9). A bearing (10) is provided to allow a rotation of the pinion (4) with respect to the planetary frame (3). A set of bearings (11) are provided to allow rotation of the planetary wheels (2) with respect to the planetary frame (3).

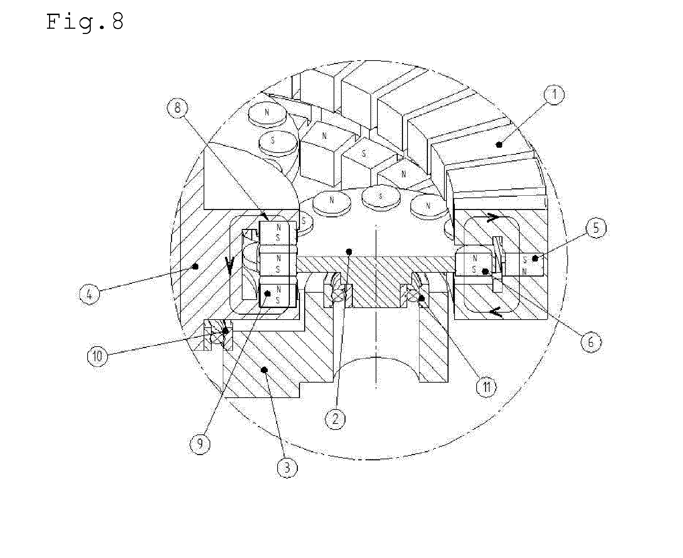

Fig. 8 is a detail of the preferred embodiment of fig. 7 showing the North (N) and South (S) poles of the sets of magnets (5), (6), (8) and (9). Some of the magnetic poles induced on the segmented wheel (1) by the magnets (5) are also shown.

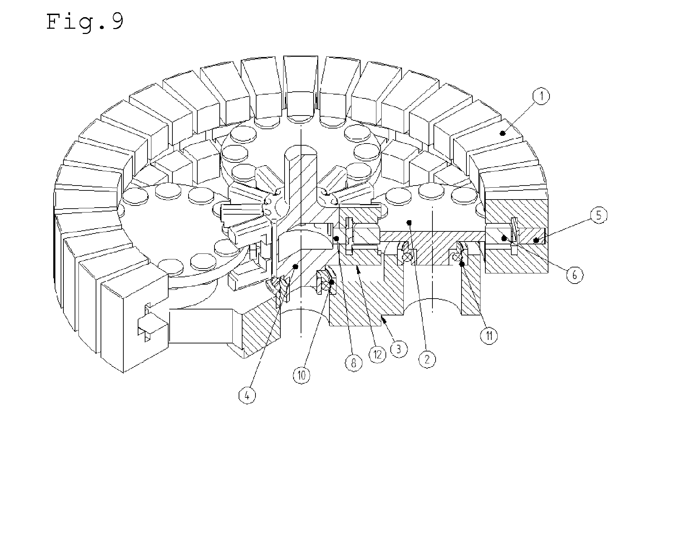

Fig. 9 shows another preferred embodiment of the present invention for a planetary magnetic gear configuration provided with a segmented wheel (1), a set of planetary wheels (2), a planetary frame (3) and a segmented pinion (4). The segmented wheel (1) is provided with a set of magnets (5), the planetary wheels (2) are provided with a set of magnets (6) and the pinion is provided with a set of magnets (8). A bearing (10) is provided to allow a rotation of the pinion (4) with respect to the planetary frame (3). A set of bearings (11) is provided to allow rotation of the planetary wheels (2) with respect to the planetary frame (3).

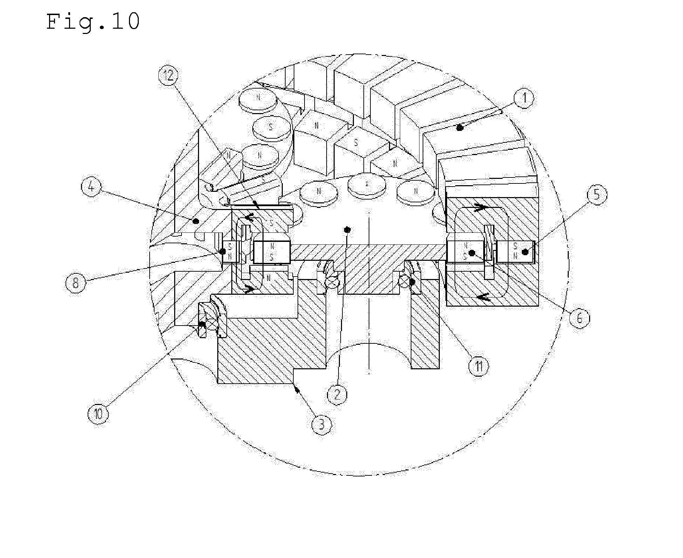

Fig. 10 is a detail of the preferred embodiment of Fig. 9 showing the North (N) and South (S) poles of the sets of magnets (5), (6) and (8). Some of the magnetic poles induced on the segmented wheel (1) by the magnets (5) and on the segmented pinion (4) by the magnets (8) are also shown.

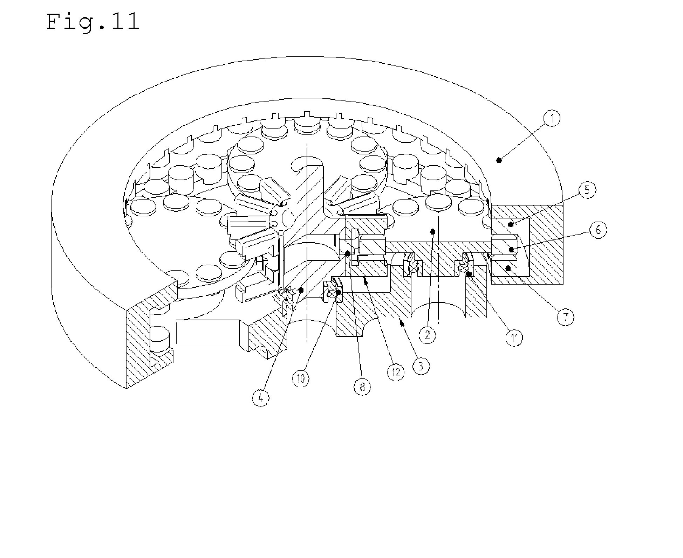

Fig. 11 shows another preferred embodiment of the present invention for a planetary magnetic gear configuration provided with a wheel (1), a set of planetary wheels (2), a planetary frame (3) and a segmented pinion (4). The wheel (1) is provided with a set of magnets (5) and a set of magnets (7), the planetary wheels (2) are provided with a set of magnets (6) and the segmented pinion is provided with only one set of magnets (8). A bearing (10) is provided to allow a rotation of the pinion (4) with respect to the planetary frame (3). A set of bearings (11) are provided to allow rotation of the planetary wheels (2) with respect to the planetary frame (3).

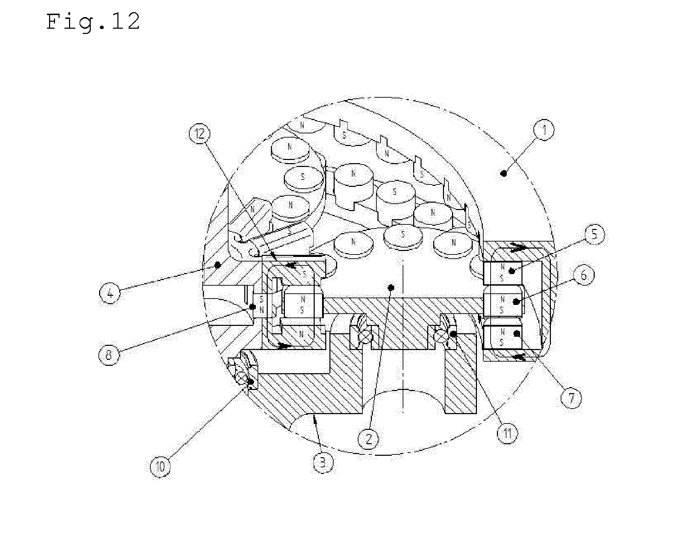

Fig. 12 is a detail of the preferred embodiment of Fig. 11 showing the North (N) and South (S) poles of the sets of magnets (5), (6), (7) and (8). Some of the magnetic poles induced on the segmented pinion (4) by the magnets (8) are also shown.

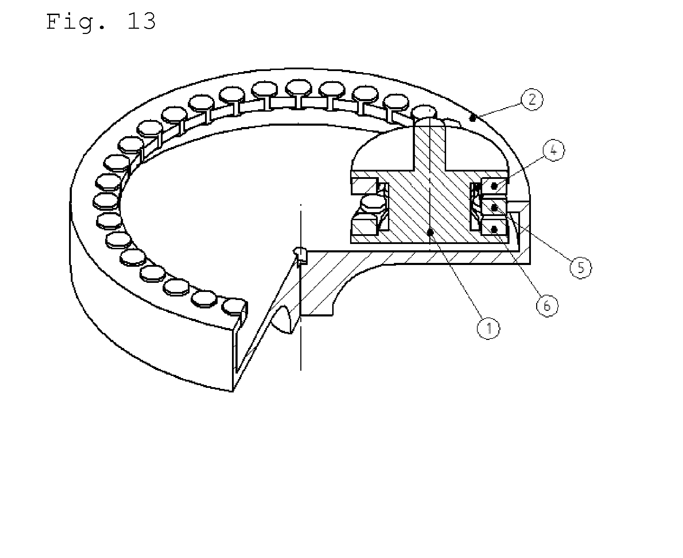

Fig. 13 is a perspective section of a preferred embodiment of the present invention in a direct spur magnetic gear configuration provided with a pinion (1) and a wheel(2). The pinion (1) is provided with a set of upper permanent magnets (4) and a lower second set of permanent magnets (6) while the wheel is provided with a set of permanent magnets (5). Both wheel and pinion will be supported by bearings -not shown in the figure-to allow a rotational movement of around their respective symmetry axis.

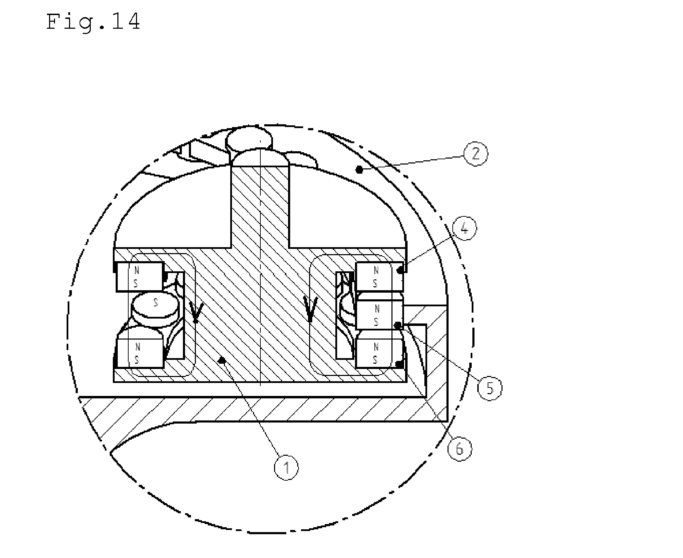

Fig. 14 is a detail of the preferred embodiment of fig. 13 showing a preferred orientation of the north (N) and south (S) poles of the magnets, with their magnetization parallel to the axis of the pinion (1) and the wheel (2).

### Description of preferred embodiments

A preferred embodiment of the non-contact magnetic gear of the present invention for a direct spur magnetic gear configuration as shown in Fig. 1 is provided with a wheel (1) and a pinion (3). The wheel (1) is provided with a set of upper permanent magnets (4) and a second set of lower permanent magnets (6) preferably axially magnetized with alternating poles as shown in fig. 2. The mentioned wheel (1) is characterized by being "U" shaped such that the upper and lower poles of magnets (4) and (6) respectively are covered by and connected through the magnetically permeable material of wheel (1) and a magnetic flux circuit is closed. This wheel (1), or at least the part of it closing the magnetic circuit, is made of a magnetically permeable material -for example and preferably carbon steel-. The magnetic flux is therefore contained in the magnetically permeable part of the wheel (1) minimizing the magnetic pollution created by the wheel (1) when rotating. The flux connection is produced partially in a radial plane through the "U" shaped magnetic material and partially circularly connecting alternated poles of next neighbours magnets. The pinion (3) is provided with a set of permanent magnets (5). The engagement or torque transmission is produced by the magnetic attraction between magnets (5) and the corresponding magnets (4) and (6). Both wheel and pinion are supported by bearings -not shown in the figure- to allow a rotational movement of around their respective symmetry axis.

A second preferred embodiment of the present invention, as shown in figs. 3 and 4 is provided with only one set of permanent magnets (4) inserted in a radially segmented wheel (1) with "U" shaped section made of a magnetically permeable material and closing the magnetic flux circuit within radial planes. The segmentation prevents a circularly tangential closing of the magnetic flux between next neighbour magnets. This preferred embodiment is additionally provided with a pinion (3) with a set of permanent magnets (5). Both wheel and pinion are supported by bearings -not shown in the figure- to allow a rotational movement around their respective symmetry axis.

A third preferred embodiment of the present invention, as shown in figs. 5 and 6, for a planetary magnetic gear configuration is provided with a wheel (1), a set of planetary wheels (2), a planetary frame (3) and a pinion (4). The wheel (1), made of a permeable magnetic material, is provided with a set of magnets (5) and a set of magnets (7) whose upper and lower poles of permanent magnets (5) and (7) respectively are covered by the permeable magnetic material of the mentioned wheel (1) closing magnetic flux circuits as described previously. The magnetic flux emerging from the external poles of the magnets (5) and (7) is therefore minimized. Accordingly, the magnetic pollution resulting from the movement of the wheel (1) is minimized. The planetary wheels (2) are provided with a set of magnets (6) and the pinion is provided with a set of magnets (8) and a second set of magnets (9). The pinion is characterized by covering the upper and lower poles of the upper and lower permanent magnets (8) and (9) respectively with a magnetically permeable part of the pinion (4). The magnetic flux circuit is closed both in a radial plane and in circular direction connecting alternating poles of next neighbour magnets (8) and (9). A bearing (10) is provided to allow a rotation of the pinion (4) with respect to the planetary frame (3). A set of bearings (11) are provided to allow rotation of the planetary wheels (2) with respect to the planetary frame (3).

A forth preferred embodiment of the present invention, as shown in figs. 7 and 8, for a planetary magnetic gear configuration is provided with a radially segmented wheel (1), a set of planetary wheels (2), a planetary frame (3) and a pinion (4). The radially segmented wheel (1) with "U" shaped section is made of a magnetically permeable material and is provided with only one set of permanent magnets (4) closing the magnetic flux circuit within radial planes. The segmentation prevents a circularly tangential closing of the magnetic flux between next neighbour magnets. The planetary wheels (2) are provided with a set of magnets (6). The pinion (4) is provided with a set of magnets (8) and a second set of magnets (9) as in the third preferred embodiment of the present invention. A bearing (10) is provided to allow a rotation of the pinion (4) with respect to the planetary frame (3). A set of bearings (11) are provided to allow rotation of the planetary wheels (2) with respect to the planetary frame (3).

A fifth preferred embodiment of the present invention, as shown in figs. 9 and 10, for a planetary magnetic gear configuration is provided with a radially segmented wheel (1), a set of planetary wheels (2) and a planetary frame (3) as in the fourth preferred embodiment. It is additionally provided with a "U" section shaped and radially segmented pinion (4) provided with a set of magnets (8) additionally characterized by closing the magnetic flux circuit for a better engagement with magnets (6) of the planetary wheels (2) and a lower magnetic pollution generation.

A sixth preferred embodiment of the present invention, as shown in figs. 11 and 12, for a planetary magnetic gear configuration is provided with a wheel (1) similar to that of the third preferred embodiment and a radially segmented pinion (4) similar to that of the fifth preferred embodiment of the present invention.

A seventh preferred embodiment of the present invention, as shown in figs. 13 and 14, for a direct spur gear configuration, is provided with a pinion (1) and a wheel (2). In this case the pinion (1) is provided with a set of upper permanent magnets (4) and a second set of lower permanent magnets (6) preferably axially magnetized with alternating poles as shown in fig. 2. The mentioned pinion(1) is characterized by being "U" shaped such that the upper and lower poles of magnets (4) and (6) respectively are covered by and connected through the magnetically permeable material of pinion (1) and a magnetic flux circuit is closed. This pinion (1), or at least the part of it closing the magnetic circuit, is made of a magnetically permeable material -for example and preferably carbon steel-. The magnetic flux is therefore contained in the magnetically permeable part of the pinion (1) minimizing the magnetic pollution created by the pinion (1) when rotating. The flux connection is produced partially in a radial plane through the "U" shaped magnetic material and partially circularly connecting alternated poles of next neighbours magnets. The wheel(2) is provided with a set of permanent magnets (5). The engagement or torque transmission is produced by the magnetic attraction between magnets (5) and the corresponding magnets (4) and (6). Both wheel and pinion are supported by bearings -not shown in the figure- to allow a rotational movement of around their respective symmetry axis.

In all the embodiments of the present invention the condition of earth and moving wheels can be exchanged by well-known kinematic inversion as usual in spur and planetary gears.

Patent documents cited in the description
- GB1331943A
- US687292
- US3792578
- GB2463102A
- US56335551997
- US59948091999
- WO2006105617A1
- WO2004005760A1
- FR2546253A1

## Claims

1. A contactless magnetic gear provided with at least two wheels, both provided with magnets fixed to them, these magnets being regularly distributed along circles concentrically to the wheels themselves, **characterized by** being the radial section of at least one of the wheels "U" shaped, made of a magnetic permeable material conforming a magnetic flux circuit except for the gap where the magnets of the other wheel pass through.

2. The contactless magnetic gear of the previous claim **characterized by** being at least one of the wheels radially segmented.

3. A contactless magnetic planetary gear **characterized by** being provided with at least two gearing wheels according to any of the previous claims.
